# FASCICULE DE BREVET EUROPEEN

(11) **EP 3 896 129 B1**
(45) Date de publication et mention de la délivrance du brevet: **31.01.2024**
(21) Numéro de dépôt: 21168404.8
(22) Date de dépôt: 14.04.2021
(51) Int. Cl.: C08L 23/16, C08K 3/04

(54) **COMPOSITION ACTIVATRICE DE VULCANISATION**
ZUSAMMENSETZUNG EINES AKTIVATORS FÜR DIE VULKANISATION
ACTIVATING COMPOSITION FOR VULCANISING

(30) Priorité: 14.04.2020 BE 202005243
(43) Date de publication de la demande: 20.10.2021
(73) Titulaire: Societe Industrielle Liegeoise des Oxydes SA, B-4480 Engis (BE)
(72) Inventeur: ROUMACHE, Olivier, 4480 Engis (BE)
(74) Mandataire: Gevers Patents

(56) Documents cités:
- WO-A1-2016/042524
- WO-A1-2016/074992
- GB-A- 2 007 683

## Description

### Domaine de l'invention

La présente invention se situe dans le domaine de la vulcanisation de polymère, plus précisément dans le domaine des compositions activatrice de vulcanisation.

### Etat de la technique

La vulcanisation est une réaction de réticulation survenant lorsque un polymère vulcanisable est mis en présence d'un agent vulcanisant (généralement du souffre) et d'énergie thermique. Cette dernière est nécessaire à l'établissement des liaisons chimiques entre l'agent vulcanisant et les sites réactifs des chaînes moléculaires du polymère formant ainsi un réseau tridimensionnel.

Une fois le polymère vulcanisé, celui-ci possède des propriétés mécaniques et élastiques spécifiques et adéquates pour être utilisé dans divers domaines d'application, par exemple dans les pneus.

Afin d'activer la réaction de vulcanisation entre le polymère et l'agent vulcanisant, il est connu d'utiliser un activateur de vulcanisation tel qu'un composé oxygéné de métal divalent dont le plus couramment utilisé est l'oxyde de zinc, ZnO et/ ou l'hydroxycarbonate de zinc.

Il est présumé que, l'activateur se combine avec l'acide stéarique pour générer un complexe actif. Ce dernier permet alors d'activer le composé soufré intervenant dans la réaction de vulcanisation et de réduire le temps de vulcanisation.

Le document intitulé "Activators in Accelerated Sulfur Vulcanization" (Geert Heideman, Rabin N. Datta, Jacques W. M. Noordermeer, et Ben van Baarle publié dans « Rubber Chemistry and Technology », juillet 2004 ; volume 77, numéro 3, pages 512-541) discute et rassemble la plupart des publications pertinentes qui traitent de la vulcanisation.

WO2016/0425624 divulgue une composition comprenant entre 5 et 50% en poids d'un sel accélérateur de vulcanisation, de 5 à plus ou moins 40% en poids d'un substrat sous forme de particules solides et de 10 à 90% en poids d'un matériau hydrophobe. Le substrat peut être de la silice et le matériau hydrophobe peut être des cires du type Fischer Tropsch.

En général, un polymère (par ex. le caoutchouc naturel) est vulcanisé avec du soufre et du ZnO à hauteur de 5 à 8 phr de ZnO. Le « phr » est une unité de mesure qui permet d'exprimer le nombre de parts d'un composant d'une composition à vulcaniser par rapport à 100 parts de polymère exprimées en poids. Donc, un phr de ZnO est l'équivalent d'une part de ZnO pour 100 parts de polymère exprimées en poids.

Pour des raisons économiques, et de protection de l'environnement, il est recommandé de réduire autant que possible l'utilisation l'agent de vulcanisation (le plus souvent du ZnO) dans le procédé de vulcanisation. En effet, l'oxyde de zinc est un composé coûteux et néfaste pour l'environnement. Il existe donc un besoin continu de pouvoir réduire la quantité de ZnO utilisée dans les procédés de vulcanisation. Il existe des solutions qui consistent à remplacer l'agent de vulcanisation (le plus souvent du ZnO) par des compositions activatrices comprenant des quantités réduites en agent de vulcanisation.

Le document US 6,046,260 A décrit l'utilisation de dispersions d'oxyde de zinc afin d'améliorer l'incorporation de l'oxyde de zinc dans des élastomères tels que les caoutchoucs naturels afin d'activer le durcissement ou la vulcanisation de ceux-ci. La dispersion d'oxyde de zinc décrite dans ce document comprend au moins 40 % en poids d'oxyde de zinc et au moins 5 % en poids d'un liant choisi dans le groupe constitué de l'asphalte et de terpènes tackifiants. Il a été démontré que de telles dispersions comprenant 80 % d'oxyde de zinc peuvent être incorporées plus rapidement dans le caoutchouc et permettent d'obtenir un meilleur état de durcissement et de meilleurs propriétés physiques qu'une poudre constituée de 100 % de ZnO.

Le document US 6,277,901 B1 divulgue des additifs pour caoutchouc adaptés pour être incorporés et dispersés dans le caoutchouc. La composition comprend au moins une substance additive sous forme de poudre solide pouvant être un additif de vulcanisation enrobée dans un dispersant. Plus particulièrement, pour réduire la quantité de ZnO, ce document divulgue que du ZnO ayant une surface spécifique BET élevée (42m²/g) est utilisé. Ce dernier est enrobé d'un revêtement formé d'un mélange de graisse de laine/ester d'acides gras dans un réacteur à lit fluidisé. La composition de ZnO ainsi obtenue a été utilisée dans un procédé de vulcanisation.

Le document US 2008/0015286 A1 décrit une composition permettant de réduire la quantité de métal divalent (activateur de durcissement, tel que le ZnO) tout en améliorant les propriétés physiques du produit résultant de la réaction de durcissement (« cure reaction » en anglais). Les résultats décrits dans ce document sont atteints par la microencapsulation des composants actifs tels que le ZnO, le stéarate de Zn et/ou l'acide stéarique afin d'éviter le réaction « parasite » du stéarate de zinc avec les groupements hydroxyles de la silice utilisée comme charge (filler en anglais) dans la composition.

Toutefois, les stratégies de l'état de l'art pour réduire les quantités de d'agent d'activation (le plus souvent du ZnO) souffrent de désavantages. Par exemple, dans certains cas, les additifs utilisés peuvent être relativement chers et/ou ne procurent pas une versatilité suffisante au procédé de vulcanisation et/ou ils peuvent potentiellement causer des réactions parasites au cours de la réaction de vulcanisation. De plus, les stratégies décrites ci-avant peuvent également s'avérer très complexes à mettre en oeuvre.

Il existe donc un réel besoin de fournir une composition activatrice pour utilisation dans un procédé de vulcanisation, permettant de résoudre au moins en partie les inconvénients décrits ci-avant.

### Résumé de l'invention

Les inventeurs ont découvert de manière surprenante qu'il est possible de fournir une composition activatrice pour utilisation dans un procédé de vulcanisation, permettant de résoudre au moins en partie les inconvénients.

Il est donc proposé une composition activatrice [composition (A)] pour utilisation dans un procédé de vulcanisation, comprenant sur base du poids total de ladite composition (A):
∘ de 20 à 80 % en poids d'au moins un activateur de vulcanisation [activateur (V)];
∘ de 10 à 40 % en poids d'au moins une cire choisie dans le groupe constitué des cires de paraffine, des cires microcristallines, des cires de polyoléfines, des cires de Fischer-Tropsch, les cires de Fischer-Tropsch oxydées, leurs dérivés et leurs mélanges;
∘ de 10 à 40 % en poids d'au moins une charge inorganique [charge (I)] ou de noir de carbone.

Un autre aspect de la présente invention concerne un procédé de production de ladite composition (A).

La présente invention concerne également un procédé de vulcanisation d'une composition vulcanisable [composition (C)] comprenant, par rapport au poids total de la composition (C), les étapes de :
fourniture de ladite composition (C) comprenant :
- un mélange d'au moins un polymère vulcanisable [polymère (V)] avec entre 2 et 10 parts en poids de ladite composition (A) par rapport à 100 parts en poids dudit polymère (V),
   et avec 0,2 à 15 parts en poids d'au moins un agent vulcanisant [agent (V)] par rapport à 100 parts en poids dudit polymère (V) pour former ladite composition (C),
- un chauffage de ladite composition (C) à une température suffisante pour obtenir une composition vulcanisée.

Un dernier aspect de la présente invention concerne une composition vulcanisée obtenue par le procédé de vulcanisation selon l'invention.

### Description détaillée

Selon la présente invention, le terme « comprenant » est inclusif et ouvert et n'exclue pas l'addition d'éléments qui ne seraient pas énumérés, de compositions ou d'étapes de procédé.

### Composition (A)

Comme expliqué ci-avant, la présente invention concerne une composition (A) activatrice [composition (A)] pour utilisation dans un procédé de vulcanisation.

Les procédés de vulcanisation sont connus de l'homme de métier. En général, une réaction de vulcanisation est une réaction de réticulation chimique survenant lorsqu'un polymère vulcanisable (comme par exemple le caoutchouc naturel) est mis en présence d'un agent vulcanisant (généralement le souffre) et d'énergie thermique.

De préférence, ladite composition (A) convient pour l'utilisation dans un procédé de vulcanisation d'une composition vulcanisable [composition (C)] comprenant un polymère (V) lorsque moins de 10 parts en poids, plus préférentiellement moins de 8 parts en poids, encore plus préférentiellement moins de 6 parts en poids de ladite composition (A) sont comprises dans la composition (C) par rapport à 100 parts en poids du polymère (V).

### Activateur (V)

Ladite composition (A) comprend sur base du poids total de ladite composition (A), au moins 20% et au plus 80 % en poids d'au moins un activateur de vulcanisation [activateur (V)].

De manière générale, l'activateur (V) lorsqu'il est utilisé dans un procédé de vulcanisation interagit avec l'agent vulcanisant (en général du soufre) de manière à activer la réaction de vulcanisation, c'est-à-dire d'augmenter la vitesse de la réaction de vulcanisation. Dans le cas de la présente invention, la composition (A) peut remplacer l'activateur de vulcanisation habituellement utilisé dans un procédé de vulcanisation. La faible teneur en activateur (V) dans la composition (A) permettent de réduire la toxicité générale du procédé de vulcanisation, son prix et son effet néfaste sur l'environnement. Bien que la teneur en activateur (V) soit réduite, il a été observé de manière surprenante que l'utilisation de la composition (A) dans un procédé de vulcanisation d'un polymère permet d'obtenir un polymère vulcanisé dont les propriétés mécaniques sont similaires ou améliorées par rapport à une composition activatrice dans laquelle l'activateur (V) représenterait plus de 80% en poids de la composition activatrice. Les effets cités ci-avant sont d'autant plus vrais lorsque la composition (A) est utilisée à faible concentration dans un procédé de vulcanisation d'une composition vulcanisable.

L'activateur (V) selon la présente invention se rapporte à tout type de composé permettant d'interagir avec un agent vulcanisant tel que du soufre, de manière à activer la réaction de vulcanisation. Des exemples d'activateur (V) incluent sans s'y limiter : l'oxyde de zinc,, l'oxyde de calcium, l'hydroxycarbonate de zinc, l'hydroxyde de zinc , MgO, CdO, CuO, PbO, NiO et leurs mélanges.

L'activateur (V) est de préférence choisi dans le groupe constitué de composés oxygénés de métaux tels que les oxydes, les peroxydes ou les hydroxydes de métaux ou les hydroxycarbonates de métaux.

Avantageusement, l'activateur (V) est choisi dans le groupe des oxydes, des peroxydes, les hydroxydes ou les hydroxycarbonates de métaux de transition, des métaux alcalins ou des métaux alcalino-terreux.

De manière préférentielle, l'activateur (V) est choisi dans le groupe constitué de l'oxyde de zinc, l'hydroxyde de zinc, l'hydroxycarbonate de zinc et leurs mélanges ou leurs dérivés, de manière encore plus préférentielle l'activateur (V) est un mélange d'oxyde de zinc et d'hydroxyde de zinc ou encore plus préférentiellement l'activateur (V) est un mélange d'oxyde de zinc, d'hydroxyde de zinc et d'hydroxycarbonate de zinc.

Avantageusement, la composition (A) peut comprendre au plus 70 %, de préférence au plus 60 %, plus préférentiellement au plus 50 %, encore plus préférentiellement au plus 40 %, encore plus préférentiellement au plus 35 % en poids dudit activateur (V) par rapport au poids total de ladite composition (A).

Ladite composition (A) contient au moins 20 %, préférentiellement au moins 22 %, plus préférentiellement au moins 23%, encore plus préférentiellement au moins 25% en poids dudit activateur (V) par rapport au poids total de ladite composition (A).

Dans un mode de réalisation préféré, ladite composition (A) comprend de 20 % à 70 % en poids, de préférence de 20 % à 60 % en poids, plus préférentiellement de 20 % à 50 % en poids, encore plus préférentiellement de 20 à 40 %, encore plus préférentiellement de 22% à 40 %, encore plus préférentiellement de 23% à 40%, encore plus préférentiellement de 25% à 35% en poids dudit activateur (V) par rapport au poids total de ladite composition (A).

Ledit activateur (V) peut être présent sous la forme de particules.

La composition (A) selon la présente invention permet d'utiliser des activateurs (V) présentant une large gamme de surface spécifique, ce qui permet de valoriser des activateurs (V) possédant une surface spécifique faible et des activateur (V) possédant une surface spécifique élevée, ce qui contribue à la versatilité de la composition (A).

De manière générale, l'activateur (V) peut présenter une surface spécifique BET d'au moins 1 m²/g, de préférence d'au moins 2 m²/g, plus préférentiellement d'au moins 3 m²/g, encore plus préférentiellement d'au moins 4 m²/g, encore plus préférentiellement d'au moins 5m²/g, encore plus préférentiellement d'au moins 10 m²/g, encore plus préférentiellement au moins 15 m²/g, encore plus préférentiellement au moins 20 m²/g, encore plus préférentiellement au moins 25 m²/g, encore plus préférentiellement au moins 30 m²/g, encore plus préférentiellement au moins 35 m²/g, encore plus préférentiellement au moins 40 m²/g. L'activateur (V) peut présenter de préférence une surface spécifique BET d'au plus 100 m²/g, plus préférentiellement d'au plus 90 m²/g, encore plus préférentiellement d'au plus 80 m²/g, encore plus préférentiellement au plus 70 m²/g, encore plus préférentiellement au plus 60 m²/g, encore plus préférentiellement au plus 55 m²/g.

Dans un mode de réalisation préférentiel, l'activateur (V) présente une surface spécifique BET comprise entre 1 et 100 m²/g, de préférence entre 2 et 90 m²/g, plus préférentiellement entre 3 et 80 m²/g plus préférentiellement entre 4 et 70 m²/g plus préférentiellement entre 5 et 60 m²/g.

Dans un mode de réalisation particulier, l'activateur (V) peut présenter une surface spécifique BET comprise entre 15 et 100 m²/g, de préférence entre 20 et 100 m²/g, plus préférentiellement entre 25 et 90 m²/g, plus préférentiellement entre 30 et 80 m²/g, plus préférentiellement entre 30 et 70 m²/g, encore plus préférentiellement entre 30 et 60 m²/g, encore plus préférentiellement entre 40 et 60 m²/g.

Dans un mode de réalisation alternatif, l'activateur (V) peut présenter une surface spécifique BET comprise entre 1 et 15 m²/g, de préférence entre 1 et 10 m²/g, plus préférentiellement entre 2 et 10 m²/g, plus préférentiellement entre 3 et 10 m²/g, plus préférentiellement entre 4 et 10 m²/g, encore plus préférentiellement entre 5 et 10 m²/g.

Dans le cadre de la présente invention, la surface spécifique BET est mesurée par mesurée par manométrie d'adsorption avec un mélange hélium/azote (70/30) et calculée selon la méthode BET (Brunauer-Emmett-Taylor), après dégazage à 150 °C pendant au moins 1 heure.

Ledit activateur (V) peut présenter un diamètre moyen D₅₀ d'au moins 100 nm, de préférence au moins 200 nm, plus préférentiellement au moins 250 nm, encore plus préférentiellement au moins 300 nm. Ledit activateur (V) peut présenter un diamètre moyen D₅₀ d'au plus 1000 nm, de préférence d'au plus 800 nm, plus préférentiellement au plus 600 nm, plus préférentiellement d'au plus 500 nm.

Dans un mode de réalisation particulier, ledit activateur (V) peut présenter un diamètre moyen D₅₀ compris entre 100 et 1000 nm, de préférence entre 200 et 800 nm, préférentiellement entre 250 et 600 nm, plus préférentiellement entre 300 et 500 nm.

Dans un autre mode de réalisation, les activateurs peuvent être de taille nanométrique ou présenter un diamètre moyen D₅₀ de moins de 100 nm, de préférence de moins de 50 nm, plus préférentiellement de moins de 25 nm, encore plus préférentiellement de moins de 10 nm.

La notation Dₓ représente un diamètre, exprimé en µm, par rapport auquel X % en volume du volume total des particules mesurées est composé de particules plus petites. Dans le cadre de la présente invention, toutes les mesures de granulométrie de D₅₀, sont des mesures de granulométrie laser effectuée dans un dispersant aqueux. La mesure de granulométrie laser peut être effectuée après ultrasonication, pour désagglomérer les particules éventuellement agglomérées.

Dans un mode de réalisation préféré, ladite composition (A) comprend de 20 % à 70 % en poids, de préférence de 20 % à 60 % en poids, plus préférentiellement de 20 % à 50 % en poids, encore plus préférentiellement de 20 à 40 %, encore plus préférentiellement de 22% à 40 %, encore plus préférentiellement de 23% à 40%, encore plus préférentiellement de 25% à 35% en poids dudit activateur (V) par rapport au poids total de ladite composition (A), l'activateur (V) étant un mélange d'oxyde de zinc et d'hydroxyde de zinc et présente un diamètre moyen D₅₀ compris entre 300 et 500 nm, et une surface spécifique BET comprise entre 5 et 60 m²/g.

### La cire

La composition (A) comprend aussi de 10 à 40 % en poids d'au moins une cire choisie dans le groupe constitué des cires de paraffine, des cires microcristallines, des cires de polyoléfines, des cires de Fischer-Tropsch, les cires de Fischer-Tropsch oxydées, leurs dérivés et leurs mélanges.

En général, les cires microcristallines sont dérivées du pétrole et raffinées à partir de résidus de cire (en anglais : slack wax) pour fractionner et séparer la fraction microcristalline.

Les cire de polyoléfines incluent sans s'y limiter les cires de polyéthylène, les cires de polypropylène, les cires de copolymères polyéthylène-polypropylène et leurs mélanges. Les cires de polyéthylène et de polypropylène peuvent avoir généralement une masse moléculaire moyenne en nombre (Mn) comprise entre 1000 et 10000 g/mol. Les cires de polyéthylène incluent sans s'y limiter les cires d'homopolymère de polyéthylène, les cires de polyéthylène craquées thermiquement, les cires de polyéthylène haute densité, les cires de polyéthylène basse densité et leurs mélanges.

Les cires de Fischer-Tropsch sont traditionnellement synthétisées par le procédé Fischer-Tropsch. Ces cires synthétiques sont fabriquées dans un environnement contrôlé en utilisant du monoxyde de carbone et de l'hydrogène comme matière première, produisant en majorité des chaines d'hydrocarbures saturés.

Ladite au moins une cire de la présente invention permet d'agir comme liant pour les différents composants de la composition (A). De plus, au cours d'un procédé de vulcanisation, une phase huileuse apolaire est souvent ajoutée au polymère vulcanisable (par exemple des huiles de paraffine). Les cires utilisées dans le cadre de la présente invention ont aussi tendance à être apolaires, ce qui facilite la comptabilisation de la composition (A) avec la phase huileuse. De plus, les cires utilisées dans le cadre de la présente invention présentent un pourcentage d'insaturation faible ou nul. Les insaturations pouvant réagir pendant le procédé de vulcanisation, il est donc clairement avantageux d'utiliser les cires telles que définies ci-avant. En effet, leur taux d'insaturations faible ou nul permet de limiter les réactions secondaires lors de la vulcanisation et de mieux contrôler la nature et/ou les propriétés du polymère réticulé obtenu après vulcanisation. Ladite au moins une cire présente aussi une faible toxicité et une faible réactivité, il y a donc peu de chance pour que ces cires interagissent négativement avec l'activateur (V) avant et pendant le procédé de vulcanisation.

Avantageusement, ladite cire a une viscosité d'au moins 3 cPs, de préférence au moins 5 cPs, plus préférentiellement au moins 10 cPs, mesurée selon la norme ASTM D3236 à 149°C. Ladite cire peut avoir une viscosité d'au plus 2000 cPs, préférentiellement au plus 1800 cPs, plus préférentiellement au plus 1600 cPs, encore plus préférentiellement au plus 1500 cPs, encore plus préférentiellement au plus 1300 cPs, encore plus préférentiellement au plus 1200 cPs mesurée selon la norme ASTM D3236 à 149°C. Plus avantageusement, ladite cire peut avoir une viscosité comprise entre 3 cPs et 2000 cPs, préférentiellement comprise entre 5 cPs et 1800 cPs, plus préférentiellement comprise entre 10 cPs et 1600 cPs, encore plus préférentiellement comprise entre 10 cPs et 1500 cPs, encore plus préférentiellement comprise entre 10 cPs et 1300 cPs, encore plus préférentiellement comprise entre 10 cPs et 1200 cPs mesurée selon la norme ASTM D3236 à 149°C

Dans un mode de réalisation alternatif, ladite cire a une viscosité d'au plus 50 cPs, préférentiellement au plus 40 cPs, plus préférentiellement au plus 30 cPs, encore plus préférentiellement au plus 20 cPs, mesurée selon la norme ASTM D3236 à 149°C. Ladite cire peut avoir une viscosité comprise entre 3 cPs et 50 cPs, de préférence entre 5 cPs et 40 cPs, plus préférentiellement entre 10 et 30 cPs, encore plus préférentiellement entre 10 et 20 cPs, mesurée selon la norme ASTM D3236 à 149°C.

Dans un autre mode de réalisation particulier, ladite cire a une viscosité d'au moins 500 cPs, préférentiellement au moins 700 cPs, plus préférentiellement au moins 900 cPS, encore plus préférentiellement au moins 1000 cPs, mesurée selon la norme ASTM D3236 à 149°C. Ladite cire peut avoir une viscosité comprise entre 500 cPs et 2000 cPs, de préférence entre 700 cPs et 1800 cPs, plus préférentiellement entre 900 cPs et 1600 cPs, encore plus préférentiellement entre 1000 cPs et 1500 cPs, encore plus préférentiellement entre 1000 cPs et 1300 cPs, encore plus préférentiellement entre 1000 cPs et 1200 cPs mesurée selon la norme ASTM D3236 à 149°C.

Avantageusement, ladite cire est solide à température ambiante. De préférence, la dite cire peut avoir un point de ramollissement d'au moins 25°C, de préférence d'au moins 35°C, de préférence d'au moins 50°C, de préférence d'au moins 80 °C plus préférentiellement d'au moins 100°C encore plus préférentiellement d'au moins 105°C, mesuré selon la norme ASTM D3954. Ladite cire peut avoir un point de ramollissement d'au plus 130°C, de préférence d'au plus 125 °C plus préférentiellement d'au plus 123°C encore plus préférentiellement d'au plus 120°C, mesuré selon la norme ASTM D3954.

Dans un mode de réalisation préféré, ladite cire peut avoir un point de ramollissement compris entre 25°C et 130°C, préférentiellement entre 35 et 125°C, préférentiellement entre 50°C et 125°C, plus préférentiellement entre 100°C et 123°C, encore plus préférentiellement entre 107°C et 120°C, mesuré selon la norme ASTM D3954.

La composition (A) comprend au moins 10 %, préférentiellement au moins 15%, plus préférentiellement au moins 20%, encore plus préférentiellement au moins 25%, encore plus préférentiellement au moins 30% en poids de ladite au moins une cire, par rapport au poids total de la composition (A).

La composition (A) comprend au plus 40 % préférentiellement au plus 38%, plus préférentiellement au plus 36%, encore plus préférentiellement au plus 35%, encore plus préférentiellement au plus 30% en poids de ladite au moins une cire, par rapport au poids total de la composition (A).

Dans un mode de réalisation préférentiel, la composition (A) comprend entre 15% et 40 % en poids, préférentiellement entre 20% et 38% en poids, plus préférentiellement entre 25% et 36% en poids, encore plus préférentiellement entre 30% et 35% en poids de ladite au moins une cire, par rapport au poids total de la composition (A).

Dans un mode de réalisation préféré, la composition (A) comprend entre 15% et 40 % en poids, préférentiellement entre 20% et 38% en poids, plus préférentiellement entre 25% et 36% en poids, encore plus préférentiellement entre 30% et 35% en poids de ladite au moins une cire de polyéthylène, par rapport au poids total de la composition (A), ladite cire ayant une viscosité comprise entre 10 cPs et 1200 cPs mesurée selon la norme ASTM D3236 à 149°C et un point de ramollissement compris entre 107°C et 120°C, mesuré selon la norme ASTM D3954.

### Charge (I)

Selon la présente invention, la composition (A) comprend de 10 à 40 % en poids d'au moins une charge (I) ou de noir de carbone.

Dans le contexte de la présente invention, ladite charge (I) peut être n'importe quelle charge pouvant être utilisée dans un procédé de vulcanisation. Le terme « charge » ne signifie pas pour autant que la charge (I) est inerte, en effet, la charge (I) peut être une base par exemple. Il est également possible que la charge (I) puisse également jouer un rôle ou non dans le procédé de vulcanisation

Ladite charge (I) inclut sans s'y limiter : les carbonates, l'alumine, la silice, des hydroxydes, des silicates, et de leurs mélanges.

Les carbonates peuvent incluent les carbonates de métal alcalino-terreux, de préférence les carbonates sont choisis dans le groupe constitué du carbonate de magnésium, du carbonate de calcium et de leurs mélanges.

Les hydroxydes peuvent incluent sans s'y limiter les hydroxydes de métal alcalino-terreux, de préférence les hydroxydes sont choisis dans le groupe constitué de l'hydroxyde de sodium, de l'hydroxyde de magnésium, de l'hydroxyde de calcium et de leurs mélanges.

La silice peut inclure sans s'y limiter la fumée de silice ou la silice précipitée.

Les silicates incluent sans s'y limiter les argiles, les micas, quartz, tridymites, cristobalites, feldspaths, feldspathoïdes, zéolites, scapolites, serpentines, kaolinites et leurs mélanges.

Ladite au moins une charge (I) selon la présente invention est avantageusement un carbonate de métal alcalino-terreux, de préférence un carbonate choisi dans le groupe constitué du carbonate de magnésium, du carbonate de calcium et de leurs mélanges.

Ladite au moins une charge (I) peut être présente sous la forme de particules solides.

Ladite au moins une charge (I) peut présenter un diamètre moyen D₅₀ d'au moins 500 nm, de préférence au moins 1 µm, plus préférentiellement au moins 1,5 µm, encore plus préférentiellement au moins 2 µm. Ladite au moins une charge (I) peut présenter un diamètre moyen D₅₀ d'au plus 10 µm, de préférence d'au plus 7 µm, plus préférentiellement au plus 5 µm, plus préférentiellement d'au plus 3 µm.

Dans un mode de réalisation particulier, ladite au moins une charge (I) peut présenter un diamètre moyen D₅₀ compris entre 500 nm et 10 µm, de préférence entre 1µm et 7µm, préférentiellement entre 1,5 µm et 5 µm, plus préférentiellement entre 2 µm et 3µm.

Ladite au moins une charge (I) peut présenter un diamètre moyen D₉₀ d'au moins 5 µm, de préférence au moins 7 µm, plus préférentiellement au moins 8 µm. Ladite au moins une charge (I) peut présenter un diamètre moyen D₉₀ d'au plus 20 µm, de préférence d'au plus 17 µm, plus préférentiellement au plus 15 µm, plus préférentiellement d'au plus 10 µm.

Dans un mode de réalisation particulier, ladite au moins une charge (I) peut présenter un diamètre moyen D₉₀ compris entre 5 µm et 20 µm, de préférence entre 7 et 17 µm, préférentiellement entre 8 µm et 15 µm, plus préférentiellement entre 8 µm et 10 µm.

Ladite au moins une charge (I) peut avantageusement présenter une surface spécifique BET comprise entre 1 m²/g et 250 m²/g, de préférence entre 1,5 m²/g et 230 m²/g, plus préférentiellement entre 2 et 200 m²/g.

Dans un mode de réalisation préféré, lorsque ladite au moins une charge (I) est un carbonate choisi dans le groupe constitué du carbonate de magnésium, du carbonate de calcium et de leurs mélanges, ladite au moins une charge (I) peut présenter une surface spécifique BET comprise entre 1 m²/g et 10 m²/g, de préférence entre 1 m²/g et 5 m²/g, plus préférentiellement entre 1 et 3 m²/g.

Dans un autre mode de réalisation préféré, lorsque ladite au moins une charge (I) est de la silice, ladite au moins une charge (I) peut présenter une surface spécifique BET comprise entre 1 m²/g et 250 m²/g, de préférence entre 50 m²/g et 250 m²/g, plus préférentiellement entre 100 et 200 m²/g.

La composition (A) comprend au plus 40 % préférentiellement au plus 38%, plus préférentiellement au plus 36%, encore plus préférentiellement au plus 35%, encore plus préférentiellement au plus 30% en poids de ladite au moins une charge (I) ou de noir de carbone, par rapport au poids total de la composition (A). La composition (A) comprend au moins 10 % en poids de ladite au moins une charge (I) ou de noir de carbone, de préférence au moins 15% en poids de ladite au moins une charge (I) ou de noir de carbone, plus préférentiellement au moins 20% en poids de ladite au moins une charge (I) ou de noir de carbone, encore plus préférentiellement au moins 25% en poids de ladite au moins une charge (I) ou de noir de carbone, encore plus préférentiellement au moins 30% en poids de ladite au moins une charge (I) ou de noir de carbone par rapport au poids total de la composition (A).

Dans un mode de réalisation préférentiel, la composition (A) comprend entre 15% et 40 % en poids, préférentiellement entre 20% et 38% en poids, plus préférentiellement entre 25% et 36% en poids, encore plus préférentiellement entre 30% et 35% en poids de ladite au moins une charge (I) ou de noir de carbone, par rapport au poids total de la composition (A).

Un autre aspect de la présente invention concerne l'utilisation de ladite composition activatrice dans un procédé de vulcanisation.

La composition (A) peut être obtenue par un procédé de production comprenant au moins une étape de mélange de, sur base du poids total de ladite composition (A) :
∘ de 20 à 80 % en poids d'au moins un activateur de vulcanisation [activateur (V)];
∘ de 10 à 40 % en poids d'au moins une cire choisie dans le groupe constitué des cires de paraffine, des cires microcristallines, des cires de polyoléfines, des cires de Fischer-Tropsch, les cires de Fischer-Tropsch oxydées, leurs dérivés et leurs mélanges;
∘ de 10 à 40 % en poids d'au moins une charge inorganique [charge (I)] ou de noir de carbone; ledit au moins un activateur (V), ladite au moins une cire et ladite au moins une charge (I) étant sous forme solide, de préférence sous forme de poudre ou de granulés.

L'homme de métier peut utiliser n'importe quel moyen connu de l'état de la technique pour mélanger l'activateur (V), la cire et ladite au moins une charge (I) ou le noir de carbone.

Dans un mode particulier de réalisation, l'activateur (V), la cire et ladite au moins une charge (I) sont mélangés en même temps. Dans ce mode de réalisation, ladite au moins une charge (I) peut être remplacée par du noir de carbone.

Dans un mode de réalisation alternatif, l'activateur (V) est mélangé avec la cire dans une première étape de manière à fournir un premier mélange. Ladite au moins une charge (I) ou du noir de carbone est ensuite ajouté(e) audit premier mélange pour former ladite composition (A).

Dans encore un autre mode de réalisation alternative, l'activateur (V) est mélangé avec ladite au moins une charge (I) dans une première étape de manière à fournir un premier mélange. Ladite cire est ensuite mélangée audit premier mélange pour former ladite composition (A).

Dans encore un autre mode de réalisation alternative, ladite cire est mélangée avec ladite au moins une charge (I) dans une première étape de manière à fournir un premier mélange. Ledit activateur (V) est ensuite mélangée audit premier mélange pour former ladite composition (A).

Avantageusement, ladite au moins une étape de mélange est réalisée à une température inférieure au point de ramollissement de la cire, de manière préférentielle à une température comprise entre 10°C et 30°C.

### Procédé de vulcanisation

Comme indiqué ci-avant, la présente invention concerne également un procédé de vulcanisation d'une composition vulcanisable [composition (C)] comprenant, par rapport au poids total de la composition (C), les étapes de :
fourniture de ladite composition (C) comprenant :
au moins un polymère vulcanisable [polymère (V)] avec entre 2 et 10 parts en poids de ladite composition (A) par rapport à 100 parts en poids dudit polymère (V) et entre 0,2 à 15 parts en poids d'au moins un agent vulcanisant [agent (V)] par rapport à 100 parts en poids dudit polymère (V) pour former ladite composition (C).
Chauffage de la dite composition (C) à une température suffisante et une durée adaptée à cette température pour obtenir une composition vulcanisée.

Selon la présente invention les termes « composition vulcanisable » se réfèrent à une composition adaptée pour subir une réaction de vulcanisation telle que décrite ci-dessus.

Le mélange d'au moins un polymère (V) et de ladite composition (A) peut comprendre d'autres composés, par conséquence ladite composition (C) peut aussi comprendre d'autres composés.

L' étape de chauffage de ladite composition (C) peut être réalisée par des moyens connus de l'homme de métier, comme par exemple une presse chauffante.

De préférence ladite composition (C) peut être chauffée à une température d'au moins 120°C, de préférence d'au moins 140°C, de préférence d'au moins 150°C, plus préférentiellement d'au moins 165°C. Si désiré, ladite composition (C) est chauffée à une température d'au plus 220°C, préférentiellement d'au plus 200°C, plus préférentiellement d'au plus 180°C.

Dans un mode de réalisation préféré, ladite composition (C) est chauffée à une température comprise entre 120°C et 220°C, plus préférentiellement entre 160°C et 200°C, encore plus préférentiellement entre 165°C et 180°C.

Le temps de chauffage de ladite composition (C) doit être suffisant pour obtenir une composition vulcanisée. L'homme de métier peut appliquer les temps de chauffage habituellement utilisé dans l'état de l'art.

### Polymère (V)

Les termes « polymère vulcanisable » [ci-après, polymère (V)] se rapportent à tout type de polymère apte à subir une réaction de vulcanisation, à savoir pouvant être réticulé chimiquement lors de cette réaction.

Le polymère (V) selon la présente invention comprend de préférence au moins une unité monomérique présentant au moins une insaturation. Cette dernière sert alors de site actif lors de la réticulation. De préférence, le polymère (V) comprend plusieurs insaturations.

Le polymère (V) peut être par exemple un homopolymère, un copolymère ou un terpolymère et peut être obtenu par des procédés de polymérisation de type Ziegler-Natta ou métallocène, sans toutefois se limiter aux procédés de polymérisation précités.

De préférence, le polymère (V) peut être un élastomère. Par exemple, le polymère (V) inclut, sans s'y limiter, les caoutchoucs naturels, le polyisoprène, le styrène butadiène (SBR), le polybutadiène, le isoprène butadiène (IBR), le styrène-isoprène butadiène (SIBR), le éthylène propylène/éthylène propylène-diène (EPDM), les élastomères nitriles, les polymères d'oxyde de propylène, les élastomères butyle ramifiés en étoile , les élastomères butyle ramifiés en étoile halogénés, le caoutchouc butyle bromé, le caoutchouc butyle chloré, le caoutchouc polyisobutylène en étoile réticulé, butyle bromé en étoile ramifié caoutchouc copolymère polyisobutylène/isoprène), poly (isobutylène-co-alkylstyrène), de préférence des copolymères isobutylène/méthylstyrène tels que isobutylène/méta-bromométhylstyrène, isobutylène/bromométhylstyrène, isobutylène/chlorométhylstyrène, isobutylène cyclopentadiène et isobutylène/chlorométhylène.

De préférence, le polymère (V) comprend une unité répétitive éthylène. Ledit polymère (V) comprend de préférence au moins 20 % en poids, de préférence au moins 30 % en poids, plus préférentiellement au moins 40 % en poids, encore plus préférentiellement au moins 50 % en poids de ladite unité répétitive éthylène par rapport au poids total dudit polymère (V). Ledit polymère (V) peut comprendre de préférence au plus 95 % en poids, plus préférentiellement au plus 90 % en poids, encore plus préférentiellement au plus 85 % en poids, encore plus préférentiellement au plus 80 % en poids de ladite unité répétitive éthylène par rapport au poids total dudit polymère (V).

Dans un mode de réalisation préférentiel, ledit polymère (V) comprend entre 20 % et 95%, de préférence, entre 30 % et 90 %, plus préférentiellement entre 40 % et 85 %, encore plus préférentiellement entre 50 % et 80 % en poids de ladite unité répétitive éthylène par rapport au poids total dudit polymère (V).

De manière plus préférentielle, ledit polymère (V) comprend en outre une unité répétitive diène. Ladite unité répétitive diène inclut par exemple sans s'y limiter, l'isoprène, le butadiène, ethylidene norbornene, dicyclopentadiene, vinyl norbornene et leurs mélanges.

De préférence, le polymère (V) comprend une unité répétitive diène. Ledit polymère (V) comprend de préférence au moins 0,1 % en poids, de préférence au moins 0,2 % en poids, plus préférentiellement au moins 0,3 % en poids, encore plus préférentiellement au moins 0,4 %, encore plus préférentiellement au moins 0,5 % en poids de ladite unité répétitive diène par rapport au poids total dudit polymère (V). Ledit polymère (V) peut comprendre de préférence au plus 25 % en poids, plus préférentiellement au plus 20 % en poids, encore plus préférentiellement au plus 15 % en poids, encore plus préférentiellement au plus 12 % en poids de ladite unité répétitive diène par rapport au poids total dudit polymère (V).

Dans un mode de réalisation préférentiel, ledit polymère (V) comprend entre 0,1 % et 25 %, de préférence, entre 0,2 % et 20 %, plus préférentiellement entre 0,3 % et 15 %, encore plus préférentiellement entre 0,5 % et 12 % en poids de ladite unité répétitive diène par rapport au poids total dudit polymère (V).

Dans un autre mode de réalisation particulier, le polymère (V) est un terpolymère et comprend entre 50 % et 80 % en poids de ladite unité répétitive éthylène et entre 0,1 % et 25 %, de préférence, entre 0,2 % et 20 %, plus préférentiellement entre 0,3 % et 15 %, encore plus préférentiellement entre 0,5 % et 12 % de ladite unité répétitive diène par rapport au poids total dudit polymère (V), ladite unité répétitive diène étant choisie dans le groupe constitué de l'éthylidène norbornène, dicyclopentadiène, vinyl norbornène et de leurs mélanges.

Dans un autre mode de réalisation alternatif, il peut être nécessaire que le polymère (V) ait un pourcentage en poids plus faible en diène, dans ce cas, le polymère (V) comprend entre 0,1 % et 10 %, de préférence, entre 0,2 % et 9 %, plus préférentiellement entre 0,3 % et 8 %, encore plus préférentiellement entre 0,5 % et 7,5 % en poids de ladite unité répétitive diène par rapport au poids total dudit polymère (V). Dans ce cas, le polymère (V) comprend en outre de préférence entre 20 % et 95%, plus préférentiellement, entre 30 % et 90 %, plus préférentiellement entre 40 % et 85 %, encore plus préférentiellement entre 50 % et 80 % en poids de ladite unité répétitive éthylène par rapport au poids total dudit polymère (V), ladite unité répétitive diène étant choisie dans le groupe constitué de l'éthylidène norbornène, dicyclopentadiène, vinyl norbornène et de leurs mélanges.

Dans un autre mode de réalisation encore alternatif, il peut être nécessaire que le polymère (V) ait un pourcentage en poids plus important en diène, dans ce cas, le polymère (V) comprend entre 1 % et 20 %, de préférence, entre 2,5 % et 17 %, plus préférentiellement entre 5 % et 15 %, encore plus préférentiellement entre 7 % et 12 % en poids de ladite unité répétitive diène par rapport au poids total dudit polymère (V). Dans ce cas, le polymère (V) comprend en outre de préférence entre 20 % et 95%, plus préférentiellement, entre 30 % et 90 %, plus préférentiellement entre 40 % et 85 %, encore plus préférentiellement entre 50 % et 80 % encore plus préférentiellement entre 50 % et 70 %, encore plus préférentiellement entre 50 % et 75 %, encore plus préférentiellement entre 50 % et 70 % encore plus préférentiellement entre 50 % et 65 % en poids de ladite unité répétitive éthylène par rapport au poids total dudit polymère (V), ladite unité répétitive diène étant choisie dans le groupe constitué de l'éthylidène norbornène, dicyclopentadiène, vinyl norbornène et de leurs mélanges.

Le polymère (V) peut comprendre en outre une unité répétitive propylène.

La fourniture de ladite composition (C) comprenant le mélange d'au moins un polymère vulcanisable [polymère (V)] avec entre 2 et 10 parts en poids de ladite composition (A) par rapport à 100 parts en poids dudit polymère (V). De préférence, la fourniture de ladite composition (C) peut comprendre le mélange d'au moins un polymère (V) avec de préférence entre 2 et 8 parts en poids, plus préférentiellement entre 3 et 7 parts en poids, encore plus préférentiellement entre 4 et 6 parts en poids de ladite composition (A) par rapport à 100 parts en poids dudit polymère (V).

### Composant additionnel

De préférence, l'étape de fourniture de ladite composition (C) peut comprendre une étape d'ajout d'au moins un composant additionnel audit polymère (V). Ledit au moins un composant additionnel étant choisi dans le groupe constitué des terres de diatomées, du quartz, du talc, des filaments de verre, du graphite, du noir de carbone, des nanotubes de carbone et de leurs mélanges.

Dans un mode de réalisation préféré, ledit au moins un composant additionnel est du noir de carbone.

### Phase huileuse

De préférence, l'étape de fourniture de ladite composition (C) peut comprendre une étape d'ajout d'une phase huileuse audit polymère (V).

La phase huileuse est liquide à température ambiante. De préférence, la phase huileuse est liquide à une température de -20°C, de préférence - 10°C, de préférence -5°C, plus préférentiellement 0°C, encore plus préférentiellement 5°C, encore plus préférentiellement 10°C , encore plus préférentiellement à une température de 15°C.

Si désiré, l'étape d'ajout d'une phase huileuse audit polymère peut être réalisée avant ou après ladite étape d'ajout d'au moins un composant additionnel. Alternativement, l'étape d'ajout d'une phase huileuse audit polymère peut être réalisée simultanément ou au moins en partie simultanément à ladite étape d'ajout d'au moins un composant additionnel.

### Acide gras

De préférence, l'étape de fourniture de ladite composition (C) peut comprendre en outre l'ajout d'au moins un acide gras..

Dans un mode de réalisation préférentiel, l'étape de fourniture de ladite composition (C) comprenant :
une étape d'ajout de 0,2 parts à 5 parts en poids, de préférence de 0,5 à 3 parts en poids, plus préférentiellement de 0,7 à 2 parts en poids d'au moins un acide gras par rapport à 100 parts en poids dudit polymère (V) pour former ladite composition (C).

Si désiré, ledit au moins un acide gras pouvant être ajouté audit au moins un polymère (V) ou à ladite composition (A) avant le mélange dudit polymère (V) et de ladite composition (A). Alternativement, ledit au moins un acide gras peut être ajouté après le mélange dudit polymère (V) et de ladite composition (A).

Des exemples d'acides gras incluent sans s'y limiter : l'acide stéarique, l'acide laurique, l'acide oléique, l'acide palmitique et leurs mélanges.

De préférence, ledit au moins un acide gras peut être choisi dans le groupe constitué de l'acide stéarique, l'acide laurique, l'acide oléique, l'acide palmitique et leurs mélanges. Plus préférentiellement, ledit au moins un acide gras est l'acide stéarique.

### Accélérateur de vulcanisation

De préférence, l'étape de fourniture de ladite composition (C) peut comprendre l'ajout en outre d'un accélérateur de vulcanisation [accélérateur (V)].

N'importe quel accélérateur (V) habituellement utilisé dans les procédés de vulcanisation peut être utilisé. En général, l'accélérateur (V) est choisi parmi les composés capable d'interagir avec l'activateur (V) de manière à réduire le temps et/ou la température de vulcanisation. De préférence, ledit accélérateur est choisi dans le groupe constitué des aldéhydes aminés, des guanidines, des thiazoles, des thiophosphates, des sulfénamides, des thiourées, des thiurames, des dithiocarbamates, des xanthates et de leurs mélanges.

Des exemples d'aldéhydes aminés incluent sans s'y limiter : l'hexaméthylènetétramine, les produits de condensations heptaldéhyde-aniline et leurs mélanges. Des exemples de guanidines incluent sans s'y limiter : le diphényle guanidine, le N, N'-diorthotolyl guanidine et leur mélange.

Des exemples de thiazoles incluent sans s'y limiter : le 2-mercaptobenzothiazole, le 2-2'-dithiobis(benzothiazole), le zinc-2-mercaptobenzothiazole et leurs mélanges. Un thiophosphate peut par exemple être le zinc-O,O-di-N-phosphorodithioate. Les sulfénamides incluent sans s'y limiter : le sulphénamide de N-cyclohexyl-2-benzothiazole, le sulphénamide de N-tert-butyl-2-benzothiazole, le 2-(4-morpholinothio)-benzothiazole, le sulphénamide de N,N'-dicyclohexyl-2-benzothiazole et leurs mélanges. Les thiourées incluent sans s'y limiter : le thiourée d'éthylène, le thiourée de di-pentaméthylène, le dibutyl thiourée et leurs mélanges. Les thiurames incluent sans s'y limiter : le monosulfure de tétraméthylthiurame, le disulfure de tétraméthylthiurame, le tétrasulfure de dipentaméthylènethiurame, le disulfure de tétrabenzylthiurame et leurs mélanges. Les dithiocarbamates incluent sans s'y limiter : diméthyldithiocarbamate de zinc, diéthyldithiocarbamate de zinc, dibutyldithiocarbamate de zinc, le dibenzyldithiocarbamate de zinc et leurs mélanges. Le xanthate peut par exemple être le zinc-isopropyl xanthate. Dans un mode de réalisation préféré, ledit accélérateur (V) est choisi dans le groupe constitué du mercaptobenzothiazole, du disulfure de tétraméthylthiurame, du sulphénamide de N-cyclohexyl-2-benzothiazole, du dibutyldithiocarbamate de zinc et de leurs mélanges.

Dans un mode de réalisation plus préféré, ledit accélérateur (V) est un mélange du mercaptobenzothiazole, du disulfure de tétraméthylthiurame, du sulphénamide de N-cyclohexyl-2-benzothiazole, du dibutyldithiocarbamate de zinc.

De préférence, au moins 0,2 parts en poids, plus préférentiellement au moins 0,5 part en poids, encore plus préférentiellement au moins 1 parts en poids, encore plus préférentiellement au moins 1,5 parts en poids dudit accélérateur (V) peuvent être ajoutés par rapport à 100 parts en poids dudit polymère (V). Si désiré, au plus 15 parts en poids, plus préférentiellement au plus 12 parts en poids, encore plus préférentiellement au plus 10 parts en poids dudit accélérateur (V) peuvent être ajoutés par rapport à 100 parts en poids dudit polymères (V).

Dans un mode de réalisation, entre 0,2 et 15 parts en poids, de préférence entre 0,5 et 12 parts en poids, plus préférentiellement entre 1 et 10 parts en poids, encore plus préférentiellement entre 1,5 et 10 parts en poids dudit accélérateur (V) peuvent être ajoutés par rapport à 100 parts en poids dudit polymère (V).

### Agent (V)

Selon la présente invention, l'agent (V) est un agent permettant la vulcanisation du polymère (V). De préférence, l'agent (V) est adapté pour réagir avec au moins une insaturation du polymère (V) de manière à induire la réticulation de ce dernier.

Des exemples d'agent (V) comprennent, sans s'y limiter : le soufre, les polysuflures, le monochlorure de soufre, le dichlorure de soufre, le tellure, le sélénium, les thiurames, les disuflures tels que le les quinonédioximes, peroxydes organiques, di-isocyanates.

De préférence, l'agent (V) est un composé soufré, et plus préférentiellement comprenant au moins une liaison disulfure (S-S). De manière plus préférentielle, l'agent (V) est un composé soufré choisi dans le groupe du soufre, des chlorures de soufre, des polysulfures et de leurs mélanges.

Les inventeurs ont démontré que pour obtenir une composition vulcanisable, la composition (C) doit contenir au moins 0,2 parts en poids d'un agent (V) par rapport à 100 parts en poids dudit polymère (V). De préférence, ladite composition (C) contient au moins 0,3 parts en poids plus préférentiellement au moins 0,5 parts en poids en poids dudit agent (V) par rapport à 100 parts en poids dudit polymère (V).

Le procédé selon l'invention comprend une étape d'ajout de 0,2 à 15 parts en poids d'au moins un agent vulcanisant [agent (V)] par rapport à 100 parts en poids dudit polymère (V) pour former ladite composition (C).

Dans un mode de réalisation préféré, le procédé selon l'invention comprend une étape d'ajout de 0,2 parts en poids à 4 parts en poids, de préférence de 0,3 parts en poids à 3 parts en poids, plus préférentiellement de 0,5 parts en poids à 3 parts en poids dudit agent (V) par rapport à 100 parts en poids dudit polymère (V).

L'agent (V) est avantageusement ajouté sous la forme d'une poudre à la composition (C).

Selon la présente invention le terme « poudre » désigne tout solide sous la forme d'une poudre, d'un granulat, de fragments ou tout état équivalent qui est présente une taille moyenne de particules inférieure à cinq millimètres (5 mm).

Un dernier aspect de la présente invention concerne une composition vulcanisée obtenue par le procédé de vulcanisation selon l'invention.

### Exemples:

L'invention va être maintenant décrite plus en détails sur base des exemples ci-dessous, dont l'objet est purement illustratif et non destiné à limiter la portée de l'invention.

### Exemple 1 - Composition (A)

Les ingrédients respectifs sont mélangés de manière homogène dans un récipient où ils ont été pesés selon un ratio en poids défini.

Différentes compositions (A) ont été préparées et sont reprises dans le tableau 1 ci-dessus. Les quantités sont exprimées en pourcentages en poids par rapport au poids total de la composition (A).

**Tableau 1 - Composition (A)**

| | **Composants de la composition (A)** | | |
|---|---|---|---|
| **Composition** | **Activateur (V)** | **Cire** | **Carbonate de calcium** |
| **(A)** | ZnO | | |
| **1** | 60 % | 20 % | 20 % |
| **2** | 30 % | 35% | 35 % |
| **3** | 20 % | 40 % | 40 % |
| **C1** | 100 % | / | / |

Pour toutes les compositions (A) du tableau 1, le ZnO a une surface spécifique BET comprise entre 40 et 50 m²/g mesurée par manométrie d'adsorption avec un mélange hélium/azote (70/30) et calculée selon la méthode BET (Brunauer-Emmett-Taylor), après dégazage à 150 °C pendant au moins 1 heure et un D₅₀ compris entre 200 nm et 300 nm.

La cire utilisée est une cire de polyéthylène ayant une viscosité comprise entre 10 cPs et 1200 cPs mesurée selon la norme ASTM D3236 à 149°C et un point de ramollissement compris entre 107°C et 120°C, mesuré selon la norme ASTM D3954.

Le carbonate de calcium utilisé a une surface spécifique BET de 2 m²/g, un D₅₀ de 2,4 µm et un D₉₀ de 9,0 µm.

### Exemple 2 - procédé de vulcanisation

Dans une première étape, du noir de carbone (N550) et une phase huileuse étant liquide à une température comprise entre 15°C et 30°C sont ajouté à de l'EPDM (Vistalon ^{™} 8800) dans un mélangeur interne GK12 WP.

Le mélange obtenu est ensuite travaillé pendant 2 minutes sur un mélangeur à cylindre.

Ensuite, la composition (A) telle qu'obtenue à l'exemple 1 et l'acide stéarique sont ajoutés pour obtenir un pré-mélange. Dans cet exemple, les compositions (A) 1 à 3 sont utilisées.

Le prémélange est ensuite malaxé pendant 5 minutes au cours desquelles sont ajoutés les accélérateurs et le soufre.

Après la mesure de la rhéologie (voir plus bas) pour connaitre les conditions de vulcanisation (entre autres le t90), le mélange est ensuite moulé à une température de 170°C pendant un temps connu de l'homme de métier, par exemple t90 pour les plaques servant à réaliser les éprouvettes pour les mesures de R/R, ALL, Mod 100 (voir tableau 3) et t90+5 minutes pour les plots servant à mesurer la DRC (voir tableau 3).

Les quantités utilisées des différents composants sont repris dans le tableau 2.

**Tableau 2 - Composition (C)**

| **Composés** | **Parties** |
|---|---|
| EPDM | 100 |
| Noir de carbone | 80 |
| Phase huileuse | 50 |
| Acide stéarique | 1 |
| Soufre | 0,75 |
| Mercaptobenzothiazole (MBT) | 1,5 |
| tetramethylthiuram disulfide (DTMT) | 1,5 |
| cyclohexyl-benzothiazole sulfonamide (CBS) | 2 |
| zinc dibutyle dithiocarbonate (ZDBC, CAS 136-23-2) | 2 |
| Composition (A) 1 à 3 du tableau 1 | 5 |

La composition (C) est préparée tel qu'indiqué dans le tableau 1. Les quantités sont exprimées en parties, c'est-dire-dire par rapport à 100 parts de Polymère (V). Les quantités de composition (A) sont variables selon les exemples.

Quand la composition (A) 1 à 3 (tableau 1) est utilisée, il est observé que les propriétés mécaniques sont aussi bonnes ou très proches en comparaison où 100% de ZnO a été utilisé (C1 (comparatif 1)). Il en résulte qu'en utilisant une quantité réduite en ZnO, les propriétés mécaniques sont au moins aussi bonnes (voir tableau 3 ci-dessous).

**Tableau 3**

| **N° mélange** | **C1** | **1** | **2** | **3** |
|---|---|---|---|---|
| **Température (°C)** | 170°C | 170°C | 170°C | 170°C |
| **Ts2 (min)** | 1,1 ±0,03 | 1,53 ±0,1 | 1,15 ±0,06 | 1,46 ±0,04 |
| **Cmax (dNm)** | 14,77 ±0,51 | 12,06 ±0,24 | 12,63 ±0,42 | 10,65 ±0,67 |
| **T90 (min)** | 4,80 ±0,68 | 5,80 ±0,91 | 3,83 ±0,77 | 4,18 ±0,93 |
| **R/R (Mpa)** | 10,3 ±0,6 | 9,6 ±0,6 | 9,7±0,5 | 10,7±0,4 |
| **All (%)** | 269 ±12 | 260 ±8 | 290±11 | 371±15 |
| **Mod 100 (MPa)** | 3,6±,2 | 3,6 ±0,1 | 3,3±0,1 | 2,8±0,2 |
| **Dureté (Sh-A)** | 63±1 | 62,5±1 | 62,5±1 | 61±1 |
| **DRC 70h** à **100°C (%)** | 36,5 % | 37,3 % | 37,9 % | 36,6 % |
| **Déchirure (KN/m)** | 123±11 | 121 ±4 | 126±11 | 132±5 |

Le rhéomètre à disque oscillant permet de déterminer la durée d'une vulcanisation par la mesure du temps de démarrage de la vulcanisation (ts2) et du temps lié à la fin de la vulcanisation (t90). Le couple maximum (Cmax) mesurés lors du test rhéologique permet de déterminer les valeurs des ts2 et t90. La variation des couples permet de donner une indication quant au taux de réticulation du produit obtenu après la vulcanisation. Le couple maximum correspond à la mesure du produit vulcanisé (durci). En effet, pour maintenir une oscillation stable du disque du rhéomètre tant en fréquence qu'en amplitude, le moteur du dispositif fournit ce qu'on appelle un couple variable. Ce dernier dépend de l'élasticité/viscosité du produit testé. Donc, plus le produit est visqueux ou élastique plus le couple est élevé.

Les mesures ts2, t90, Cmax, sont réalisées avec un rhéomètre à disque oscillant selon la norme ASTM D5289 à une température de 170°C.

R/R (résistance à la rupture), ALL (allongement), et Mod 100 (module à 100% d'allongement) ont été mesurés selon la norme NF T 46-002. DRC (déformation rémanente à la compression à 25% a été mesurée selon la norme NF T 46-011.

Les mesures de dureté (dureté SH-A) ont été réalisées selon la norme ISO7619-1 2010.

Les mesures en déchirure ont été réalisées selon la norme NF T 46-007.

## Revendications

1. Composition activatrice [composition (A)] pour utilisation dans un procédé de vulcanisation, comprenant sur base du poids total de ladite composition (A):
∘ de 20 à 80 % en poids d'au moins un activateur de vulcanisation [activateur (V)];
∘ de 10 à 40 % en poids d'au moins une cire choisie dans le groupe constitué des cires à base de paraffine, des cires microcristallines, des cires de polyoléfines, des cires de Fischer-Tropsch, les cires de Fischer-Tropsch oxydées, leurs dérivés et leurs mélanges;
∘ de 10 à 40 % en poids d'au moins une charge inorganique [charge (I)] ou de noir de carbone.

2. Composition selon la revendication 1 comprenant de 20 % à 50 % en poids dudit activateur (V) par rapport au poids total de ladite composition (A).

3. Composition selon la revendication 1 ou la revendication 2, comprenant de 20 % à 70 % en poids, de préférence de 20 % à 60 % en poids, plus préférentiellement de 20 % à 50 % en poids, encore plus préférentiellement de 20 à 40 %, encore plus préférentiellement de 22% à 40 %, encore plus préférentiellement de 23% à 40%, encore plus préférentiellement de 25% à 35% en poids dudit activateur (V) par rapport au poids total de ladite composition (A).

4. Composition selon l'une quelconque des revendications 1 à 3, dans laquelle l'activateur (V) est choisi dans le groupe constitué de l'oxyde de zinc, l'hydroxyde de zinc, l'hydroxy carbonate de zinc et leurs mélanges.

5. Composition selon l'une quelconque des revendications précédentes, dans laquelle ladite au moins une cire a un point de cristallisation tel qu'elle est solide à température ambiante.

6. Composition selon l'une quelconque des revendications précédentes, dans laquelle ladite au moins une cire a un point de ramollissement compris entre 25°C et 130°C.

7. Composition selon l'une quelconque des revendications précédentes, dans laquelle ladite au moins une charge (I) est choisie dans le groupe constitué des carbonates, de l'alumine, de la silice, des hydroxydes, des silicates, et de leurs mélanges.

8. Composition selon l'une quelconque des revendications précédentes, comprenant entre 15% et 40 % en poids, préférentiellement entre 20% et 38% en poids, plus préférentiellement entre 25% et 36% en poids, encore plus préférentiellement entre 30% et 35% en poids de ladite au moins une charge (I) ou de noir de carbone, par rapport au poids total de la composition (A).

9. Composition selon l'une quelconque des revendications précédentes, comprenant entre 15% et 40 % en poids de ladite au moins une cire, par rapport au poids total de la composition (A).

10. Procédé de production d'une composition activatrice selon l'une quelconque des revendications précédentes comprenant au moins une étape de mélange de, sur base du poids total de ladite composition (A) :
de 20 à 80 % en poids d'au moins un activateur de vulcanisation [activateur (V)];
de 10 à 40 % en poids d'au moins une cire choisie dans le groupe constitué des cires de paraffine, des cires microcristallines, des cires de polyoléfines, des cires de Fischer-Tropsch, les cires de Fischer-Tropsch oxydées, leurs dérivés et leurs mélanges;
de 10 à 40 % en poids d'au moins une charge inorganique [charge (I)].

11. Procédé de vulcanisation d'une composition vulcanisable [composition (C)] comprenant, par rapport au poids total de la composition (C), les étapes de : fourniture de ladite composition (C) comprenant :
• le mélange d'au moins un polymère vulcanisable [polymère (V)] avec entre 2 et 10 parts en poids de ladite composition (A) selon l'une quelconque des revendications 1 à 9, par rapport à 100 parts en poids dudit polymère (V),
et de 0,2 à 15 parts en poids d'au moins un agent vulcanisant [agent (V)] par rapport à 100 parts en poids dudit polymère (V) pour former ladite composition (C),
• chauffage de la dite composition (C) à une température suffisante et une durée adaptée à cette température pour obtenir une composition vulcanisée.

12. Procédé selon la revendication 11, dans lequel ledit polymère (V) est choisi dans le groupe constitué les caoutchoucs naturels, le polyisoprène, le styrène butadiène (SBR), le polybutadiène, le isoprène butadiène (IBR), le styrène-isoprène butadiène (SIBR), le éthylène propylène/éthylène propylène-diène (EPDM), les élastomères nitriles, les polymères d'oxyde de propylène, les élastomères butyle ramifiés en étoile, les élastomères butyle ramifiés en étoile halogénés, le caoutchouc butyle bromé, le caoutchouc butyle chloré, le caoutchouc polyisobutylène en étoile réticulé, butyle bromé en étoile ramifié caoutchouc copolymère polyisobutylène/isoprène), poly (isobutylène-co-alkylstyrène), de préférence des copolymères isobutylène/méthylstyrène tels que isobutylène/méta-bromométhylstyrène, isobutylène/bromométhylstyrène, isobutylène/chlorométhylstyrène, isobutylène cyclopentadiène et isobutylène/chlorométhylène.

13. Procédé selon la revendication 11 ou la revendication 12, dans lequel, l'étape de fourniture de ladite composition (C) comprend l'ajout d'un accélérateur de vulcanisation [accélérateur (V)].

14. Procédé selon la revendication 13, dans lequel, ledit accélérateur (V) est choisi dans le groupe constitué des aldéhydes aminés, des guanidines, des thiazoles, des thiophosphates, des sulfénamides, des thiourées, des thiurames, des dithiocarbamates, des xanthates et de leurs mélanges.

15. Composition vulcanisable [composition (C)] comprenant, par rapport au poids total de la composition (C) au moins un polymère vulcanisable [polymère (V)] avec entre 2 et 10 parts en poids de ladite composition (A) selon l'une quelconque des revendications 1 à 9 par rapport à 100 parts en poids dudit polymère (V) et de 0,2 à 15 parts en poids d'au moins un agent vulcanisant [agent (V)] par rapport à 100 parts en poids dudit polymère (V).

## Patentansprüche

1. Aktivierende Zusammensetzung [Zusammensetzung (A)] zur Verwendung in einem Vulkanisationsverfahren, umfassend, basierend auf dem Gesamtgewicht der Zusammensetzung (A):
- 20 bis 80 Gew.-% mindestens eines Vulkanisationsaktivators [Aktivator (V)];
- 10 bis 40 Gew.-% mindestens eines Wachses, das aus der Gruppe ausgewählt ist, die aus Wachsen auf Paraffinbasis, mikrokristallinen Wachsen, Polyolefin-Wachsen, Fischer-Tropsch-Wachsen, oxidierten Fischer-Tropsch-Wachsen, deren Derivaten und deren Mischungen besteht;
- 10 bis 40 Gew.-% mindestens einer anorganischen Ladung [Ladung (I)] oder Ruß.

2. Zusammensetzung nach Anspruch 1, umfassend 20 Gew.-% bis 50 Gew.-% des Aktivators (V) in Bezug auf das Gesamtgewicht der Zusammensetzung (A).

3. Zusammensetzung nach Anspruch 1 oder Anspruch 2, umfassend 20 Gew.-% bis 70 Gew.-%, vorzugsweise 20 Gew.-% bis 60 Gew.-%, bevorzugter 20 Gew.-% bis 50 Gew.-% , noch bevorzugter 20 bis 40 Gew.-%, noch bevorzugter 22 Gew.-% bis 40 Gew.-%, noch bevorzugter 23 Gew.-% bis 40 Gew.-%, noch bevorzugter 25 Gew.-% bis 35 Gew.-% des Aktivators (V) in Bezug auf das Gesamtgewicht der Zusammensetzung (A).

4. Zusammensetzung nach irgendeinem der Ansprüche 1 bis 3, wobei der Aktivator (V) aus der Gruppe ausgewählt ist, die aus Zinkoxid, Zinkhydroxid, Zinkhydroxycarbonat und deren Mischungen besteht.

5. Zusammensetzung nach irgendeinem der vorstehenden Ansprüche, wobei das mindestens eine Wachs einen Kristallisationspunkt derart aufweist, dass es bei Umgebungstemperatur fest ist.

6. Zusammensetzung nach irgendeinem der vorstehenden Ansprüche, wobei das mindestens eine Wachs einen Erweichungspunkt zwischen 25 °C und 130 °C aufweist.

7. Zusammensetzung nach irgendeinem der vorstehenden Ansprüche, wobei die mindestens eine Ladung (I) aus der Gruppe ausgewählt ist, die aus Carbonaten, Aluminiumoxiden, Kieselsäure, Hydroxiden, Silikaten und deren Mischungen besteht.

8. Zusammensetzung nach irgendeinem der vorstehenden Ansprüche, umfassend zwischen 15 Gew.-% und 40 Gew.-%, vorzugsweise zwischen 20 Gew.-% und 38 Gew.-%, bevorzugter zwischen 25 Gew.-% und 36 Gew.-%, noch bevorzugter zwischen 80 Gew.-% und 35 Gew.-% der mindestens einen Ladung (I) oder des Rußes in Bezug auf das Gesamtgewicht der Zusammensetzung (A).

9. Zusammensetzung nach irgendeinem der vorstehenden Ansprüche, umfassend zwischen 15 Gew.-% und 40 Gew.-% des mindestens einen Wachses in Bezug auf das Gesamtgewicht der Zusammensetzung (A).

10. Verfahren zur Herstellung einer aktivierenden Zusammensetzung nach irgendeinem der vorstehenden Ansprüche, umfassend mindestens einen Schritt des Mischens, basierend auf dem Gesamtgewicht der Zusammensetzung (A), von:
20 bis 80 Gew.-% mindestens eines Vulkanisationsaktivators [Aktivator (V)];
10 bis 40 Gew.-% mindestens eines Wachses, das aus der Gruppe ausgewählt ist, die aus Paraffin-Wachsen, mikrokristallinen Wachsen, Polyolefin-Wachsen, Fischer-Tropsch-Wachsen, oxidierten Fischer-Tropsch-Wachsen, deren Derivaten und deren Mischungen besteht;
10 bis 40 Gew.-% mindestens einer anorganischen Ladung [Ladung (I)].

11. Verfahren zur Vulkanisation einer vulkanisierbaren Zusammensetzung [Zusammensetzung (C)], umfassend, in Bezug auf das Gesamtgewicht der Zusammensetzung (C), die Schritte des: Bereitstellens des Zusammensetzung (C), umfassend:
- das Mischen mindestens eines vulkanisierbaren Polymers [Polymer (V)] mit zwischen 2 und 10 Gewichtsteilen der Zusammensetzung (A) nach irgendeinem der Ansprüche 1 bis 9, in Bezug auf 100 Gewichtsteile des Polymers (V),
und von 0,2 bis 15 Gewichtsteilen mindestens eines vulkanisierenden Mittels [Mittel (V)] in Bezug auf 100 Gewichtsteile des Polymers (V), um die Zusammensetzung (C) zu bilden,
- Erhitzen der Zusammensetzung (C) auf eine ausreichende Temperatur und eine an diese Temperatur angepasste Dauer, um eine vulkanisierte Zusammensetzung zu erhalten.

12. Verfahren nach Anspruch 11, wobei das Polymer (V) aus der Gruppe ausgewählt ist, die aus Naturkautschuken, Polyisopren, Styrol-Butadien (SBR), Polybutadien, Isoprenbutadien (IBR), Styrol-Isopren-Butadien (SIBR), Ethylenpropylen/Ethylenpropylen-Dien (EPDM), Nitril-Elastomeren, Propylenoxid-Polymeren, sternförmig verzweigten Butyl-Elastomeren, halogenierten sternförmig verzweigten Butyl-Elastomeren, bromiertem Butyl-Kautschuk, chloriertem Butyl-Kautschuk, sternförmig vernetztem Polyisobutylen-Kautschuk, sternförmig verzweigtem bromiertem Butyl-Kautschuk-Copolymer Polyisobutylen/Isopren), Poly(isobutylen-co-Alkylstyrol), vorzugweise Isobutylen/Methylstyrol-Copolymeren, wie beispielsweise Isobutylen/Meta-Brommethylstyrol, Isobutylen/Brommethylstyrol, Isobutylen/Chlormethylstyrol, Isobutylen Cyclopentadien und Isobutylen/Chlormethylen besteht.

13. Verfahren nach Anspruch 11 oder Anspruch 12, wobei der Schritt des Bereitstellens der Zusammensetzung (C) die Zugabe eines Vulkanisationsbeschleunigers [Beschleuniger (V)] umfasst.

14. Verfahren nach Anspruch 13, wobei der Beschleuniger (V) aus der Gruppe ausgewählt ist, die aus aminierten Aldehyden, Guaniden, Thiazolen, Thiophosphaten, Sulfenamiden, Thioharnstoffen, Thiuramen, Dithiocarbamaten, Xanthaten und deren Mischungen besteht.

15. Vulkanisierbare Zusammensetzung [Zusammensetzung (C)], umfassend, in Bezug auf das Gesamtgewicht der Zusammensetzung (C), mindestens ein vulkanisierbares Polymer [Polymer (V)] mit zwischen 2 und 10 Gewichtsteilen der Zusammensetzung (A) nach irgendeinem der Ansprüche 1 bis 9 in Bezug auf 100 Gewichtsteile des Polymers (V) und von 0,2 bis 15 Gewichtsteile mindestens eines vulkanisierenden Mittels (V) in Bezug auf 100 Gewichtsteile des Polymers (V).

## Claims

1. An activating composition [composition (A)] for use in a vulcanising method, comprising based on the total weight of said composition (A):
∘ from 20 to 80% by weight of at least one vulcanisation activator [activator (V)];
∘ from 10 to 40% by weight of at least one wax chosen from the group consisting of paraffin-based waxes, microcrystalline waxes, polyolefin waxes, Fischer-Tropsch waxes, oxidised Fischer-Tropsch waxes, their derivatives and mixtures thereof;
∘ from 10 to 40% by weight of at least one inorganic filler [filler (I)) or carbon black.

2. The composition according to claim 1 comprising from 20% to 50% by weight of said activator (V) with respect to the total weight of said composition (A).

3. The composition according to claim 1 or claim 2, comprising from 20% to 70% by weight, preferably from 20% to 60% by weight, more preferably from 20% to 50% by weight, even more preferably from 20% to 40%, even more preferably from 22% to 40%, even more preferably from 23% to 40%, even more preferably from 25% to 35% by weight of said activator (V) with respect to the total weight of said composition (A).

4. The composition according to any one of claims 1 to 3, wherein the activator (V) is chosen from the group consisting of zinc oxide, zinc hydroxide, zinc hydroxy carbonate and mixtures thereof.

5. The composition according to any one of the preceding claims, wherein said at least one wax has a crystallisation point such that it is solid at room temperature.

6. The composition according to any one of the preceding claims, wherein said at least one wax has a softening point of between 25°C and 130°C.

7. The composition according to any one of the preceding claims, wherein said at least one filler (I) is selected from the group consisting of carbonates, alumina, silica, hydroxides, silicates, and mixtures thereof.

8. The composition according to any one of the preceding claims, comprising between 15% and 40% by weight, preferably between 20% and 38% by weight, more preferably between 25% and 36% by weight, still more preferably between 30% and 35% by weight of said at least one filler (I) or of carbon black, with respect to the total weight of the composition (A).

9. The composition according to any one of the preceding claims, comprising between 15% and 40% by weight of said at least one wax, with respect to the total weight of the composition (A).

10. A method for the production of an activating composition according to any one of the preceding claims comprising at least one mixing step, based on the total weight of said composition (A):
from 20 to 80% by weight of at least one vulcanisation activator [activator (V)];
from 10 to 40% by weight of at least one wax chosen from the group consisting of paraffin waxes, microcrystalline waxes, polyolefin waxes, Fischer-Tropsch waxes, oxidised Fischer-Tropsch waxes, their derivatives and mixtures thereof;
from 10 to 40% by weight of at least one inorganic filler [filler (I)).

11. A vulcanising method of a vulcanisable composition [composition (C)] comprising, with respect to the total weight of the composition (C), the steps of: providing said composition (C) comprising:
• mixing at least one vulcanisable polymer [polymer (V)] with between 2 and 10 parts by weight of said composition (A) according to any one of claims 1 to 9, with respect to 100 parts by weight of said polymer (V),
and from 0.2 to 15 parts by weight of at least one vulcanising agent [agent (V)] with respect to 100 parts by weight of said polymer (V) to form said composition (C),
• heating said composition (C) to a sufficient temperature and for a time adapted to this temperature to obtain a vulcanised composition.

12. The method according to claim 11, wherein said polymer (V) is selected from the group consisting of natural rubbers, polyisoprene, styrene butadiene (SBR), polybutadiene, isoprene butadiene (IBR), styrene isoprene butadiene (SIBR), ethylene propylene/ethylene propylene diene (EPDM), nitrile elastomers, polymers of propylene oxide, star-branched butyl elastomers, star-branched halogenated butyl elastomers, brominated butyl rubber, chlorinated butyl rubber, cross-linked star polyisobutylene rubber, star-branched brominated butyl polyisobutylene/isoprene copolymer rubber), poly (isobutylene-co-alkylstyrene), preferably isobutylene/methylstyrene copolymers such as isobutylene/meta-bromomethylstyrene, isobutylene/bromomethylstyrene, isobutylene/chloromethylstyrene, isobutylene cyclopentadiene and isobutylene/chloromethylene.

13. The method according to claim 11 or claim 12, wherein the step of providing said composition (C) comprises adding a vulcanisation accelerator [accelerator (V)].

14. The method according to claim 13, wherein said accelerator (V) is selected from the group consisting of amino aldehydes, guanidines, thiazoles, thiophosphates, sulphenamides, thioureas, thiurams, dithiocarbamates, xanthates and mixtures thereof.

15. A vulcanisable composition [composition (C)] comprising, with respect to the total weight of the composition (C), at least one vulcanisable polymer [polymer (V)] with between 2 and 10 parts by weight of said composition (A) according to any one of claims 1 to 9 with respect to 100 parts by weight of said polymer (V) and from 0.2 to 15 parts by weight of at least one vulcanising agent [agent (V)] with respect to 100 parts by weight of said polymer (V).
